# EUROPÄISCHE PATENTANMELDUNG

(11) **EP 0 638 226 A2**
(43) Veröffentlichungstag der Anmeldung: **15.02.1995**
(21) Anmeldenummer: 94111697.2
(22) Anmeldetag: 27.07.1994
(51) Int. Cl.: A01C 3/02, A01K 1/01

(54) **Kunststoffplatte und ihre Verwendung in Güllegruben**

(30) Priorität: 04.08.1993 DE 4326074
(71) Anmelder: DEGUSSA AG, D-60311 Frankfurt (DE)
(72) Erfinder: Wiebel, Wolfgang, D-63808 Haibach (DE); Bettinger, Dieter, D-63579 Freigericht (DE); Schlund, Andreas, D-60318 Frankfurt am Main (DE); Rinkenberger, Friedhelm, D-63583 Linsengericht (DE)

(57) **Zusammenfassung**

2.1 Die in Güllegruben enthaltenen Drainagesysteme bestehen im wesentlichen aus Platten, die von Zeit zu Zeit vom Festkot gesäubert werden und auf Abstand gehalten sind. Bislang verwendete Kunststoffplatten können üblicherweise nicht von bis zu zwei Personen begangen werden und sind außerdem nur begrenzt gegenüber der aggressiven Gülle haltbar. Die neue Platte soll als Drainagesystem in Güllegruben geeignet sein und insbesondere stabil und preiswert. Ferner soll eine neue Güllegrube, die eine solche Platte enthält, geschaffen werden. 2.2 Geeignete Polyolefinhohlkammerplatten, die zwei Gurtplatten aufweisen, die durch senkrechte Stege voneinander getrennt auf Abstand gehalten sind, kennzeichnen sich dadurch, daß zwischen zwei benachbarten senkrechten Stegen ein schräger Steg angeordnet ist. Erfindungsgemäße Güllegruben, in die feste und flüssige Gülle einfällt, weisen einen Drainagezwischenboden auf, der aus mindestens einer Polyolefinhohlkammerplatte gebildet ist. 2.3 Drainagezwischenboden in Güllegruben, insbesondere für die Massentierhaltung.

## Beschreibung

Die Erfindung betrifft Polyolefinhohlkammerplatten gemäß dem Oberbegriff des Anspruchs 1, deren Verwendung. Güllegruben gemäß dem Oberbegriff des Anspruchs 7 sowie ein Verfahren zur Trennung von Gülle.

Die weltweit betriebene Massentierhaltung mit dem dabei entstehenden hohen Mengenanfall an Gülle führt vor allem in Ballungsgebieten zu einem gravierenden Umwelt- und Entsorgungsproblem. Aufgrund der bereits bestehenden hohen Bodenvergiftung und Übersäuerung durch Gülleausbringung ist es erforderlich, die Gülleausbringung zu reduzieren. Ein Hauptproblem der Gülle ist die Ammoniakbildung, die ihre Hauptursache in der ungetrennten Aufbewahrung von Fest- und Flüssigkot hat. Eine praktikable Lösung hierfür ist z. B. die Trennung von Fest- und Flüssigkot direkt beim Erzeuger, d. h. beim Züchter. Der Flüssigkot kann dann chemisch zu unschädlichen Stoffen umgesetzt werden, wogegen der Festkot zu Ballen gepreßt zu Düngezwecken Verwendung finden kann.

Die Massentierhaltung erfolgt üblicherweise auf Betonboden-Rasterelementen in definierten Abmessungen, die ihrerseits das Ableiten des anfallenden Kots in die darunterliegenden Güllegruben ermöglichen. Diese Güllegruben sind ca. 1,5 - 3,5 m, meist ca. 2,5 m tief und, je nach Tierart, meist 1,2 - 2,5 m breit. Die Länge ist stallbedingt und kann bei den üblichen Ställen durchaus bis zu 60 m oder mehr betragen. Durch Einbringen eines Drainagesystems ca. 0,5 - 1,5 m, vorzugsweise ca. 1 m unterhalb der Grubenoberkante, d. h. unterhalb der Betonboden-Rasterelemente, seitlich gelagert an den Grubenwänden kann der Festkot aufgefangen werden, wobei der Flüssigkeit weiter in die Grube geleitet wird. Die Drainagensysteme bestehen im wesentlichen aus Platten, die von Zeit zu Zeit vom Festkot gesäubert werden und auf Abstand gehalten sind, so daß durch den geringen Zwischenraum zwischen zwei benachbarten Platten der Flüssigkot in die Grube gelangen kann. Ein Problem ist hierbei das Plattenmaterial, das üblicherweise von bis zu zwei Personen begehbar sein soll und außerdem eine gewisse Widerstandsfähigkeit gegenüber Gülle haben soll. Es zeigte sich hierbei, daß die bislang verwendeten Kunststoffplatten diesem nicht Rechnung trugen.

Aufgabe der vorliegenden Erfindung ist daher eine Platte, die als Drainagesystem in Güllegruben geeignet ist sowie eine Güllegrube, enthaltend eine feste, preiswerte Platte als Drainagesystem.

Gelöst wird diese Aufgabe mit einer eingangs beschriebenen Platte, die zwischen zwei benachbarten senkrechten Stegen mindestens einen Schrägsteg angeordnet hat. Der zweite Teil der Aufgabe wird gelöst bei einer eingangs beschriebenen Güllegrube, die als Drainagezwischenboden mindestens eine Polyolefinhohlkammerplatte enthält.

Kunststoffhohlkammerplatten sind seit mehr als 30 Jahren bekannt und haben den grundsätzlichen Aufbau aus mindestens zwei Gurtplatten mit zwischen diesen liegenden Vertikal- und/oder Diagonal-Stegen. Die Gurtplatten sind meist parallel, können aber auch bauchig ausgebildet sein. Diese Struktur verleiht den Platten eine gute Steifigkeit bei geringem Eigengewicht und gute Wärmedämmeigenschaften. Je nach verwendetem Kunststoff haben die Platten auch eine hohe Lichtdurchlässigkeit und gute Witterungsbeständigkeit sowie ein den entsprechenden Anforderungen genügendes Brandverhalten. Vorzugsweise werden Hohlkammerplatten aus den Kunststoffen Polymethylmethacrylat, Polycarbonat oder Polyvinylchlorid hergestellt und finden wegen der obigen Eigenschaften Anwendung im gewerblichen Bereich, z. B. für Gewächshäuser, Industrie- und Sporthallenabdeckungen, und im privaten Bereich, z. B. für Wintergärten. Bei all diesen Anwendungen ist die gute Lichtdurchlässigkeit und gute Wärmedämmung das Hauptkriterium, wenn nur eine gewisse Stabilität erforderlich ist, werden Wellplatten eingesetzt.

Die erfindungsgemäßen Polyolefinhohlkammerplatten enthalten mindestens zwei Gurtplatten, vorzugsweise nicht mehr als drei Gurtplatten, die durch senkrechte Stege voneinander getrennt und auf Abstand gehalten sind, wobei zwischen zwei benachbarten senkrechten Stegen mindestens ein schräger Steg angeordnet ist. Vorzugsweise ist zwischen zwei benachbarten senkrechten Stegen nur ein schräger Steg angeordnet. Eine besonders hohe Stabilität erhält man, wenn zwei benachbarte schräge Stege, die durch einen senkrechten Steg getrennt sind, dachparallel zueinander verlaufen, d. h. im entgegengesetzten Winkel zueinander stehen.

Die erfindungsgemäßen Schrägstegdoppelplatten aus Polyolefin, vorzugsweise aus Polypropylen (PP), sind also aufgebaut aus zwei in einem vorgegebenen Abstand parallel (ggf. mit einem kleinen Bauch nach außen) zueinander angeordneten Platten, die durch dazwischen angeordnete unterschiedlich dimensionierte Stege miteinander verbunden sind. Der eine Teil der Stege ist schräg angeordnet, vorzugsweise nicht alle zueinander parallel stehend, sondern abwechselnd parallel, antiparallel, parallel, etc. Die bevorzugte Ausführungsform bildet ganz besonders bevorzugt eine Zickzacklinie, wobei der Winkel zur Platte je nach Ausführung im Bereich 30 bis 75_{°}, vorzugsweise 45 bis 75 beträgt. Bei der Zickzacklinie ist im Knotenpunkt der senkrechte Steg angeordnet, der wie die Zickzacklinie die obere und die untere Platte miteinander verbindet. Vorzugsweise ist der senkrechte Steg dünner ausgebildet als der schräge Steg. Je nach Steg- und Plattendicke sowie der Schrägstegwinkel beträgt das Flächengewicht der erfindungsgemäßen Platte üblicherweise zwischen 3 bis 10 kg/m², vorzugsweise 3 bis 8 kg/m².

Die Dicke der schräglaufenden Stege liegt üblicherweise im Bereich 0,4 bis 1 mm, während die Dicke der lotrecht verlaufenden Stege vorzugsweise ca. 0,2 bis ca. 0,5 mm beträgt. Die Dicke der Gurtplatten beträgt vorzugsweise 0,7 bis 3 mm und der Abstand zwischen diesen üblicherweise 11 bis 50 mm, vorzugsweise mind. 16 mm und insbesondere bis zu 40 mm.

Wenn mehr als zwei Gurtplatten angeordnet sind, dann ist vorzugsweise zwischen allen benachbarten Gurtplatten der gleiche Aufbau. Grundsätzlich können auch die erfindungsgemäßen Stegdoppelplatten insbesondere an den Kanten übereinander verschweißt werden, so daß die doppelte Dicke erhalten wird, wobei die mittlere Gurtplatte entsprechend auch die doppelte Dicke hat, sofern Gurtplatten gleicher Geometrie verwendet werden.

Polyolefinhohlkammerplatten fanden bislang lediglich Anwendung als Verpackungsmaterial. Aufgrund des geringen Elastizitätsmoduls ist bis zu einer Plattendicke von max. 10 mm eine ausreichende Flexibilität für diese Anwendung gegeben.

Polymethylmethacrylat, Polycarbonat und Polyvinylchlorid besitzen eine amorphe Struktur und sind entsprechend ideale Kunststoffe für die oben beschriebenen bekannten Hohlkammerplatten. Polyolefine, insbesondere Polypropylen ist hingegen ein teilkristalliner Kunststoff, der üblicherweise dort Anwendung findet, wo eine gewisse Flexibilität aufgrund des geringen Elastizitätsmoduls gewünscht ist.

Die erfindungsgemäße Hohlkammerplatte macht sich jedoch gerade die Kombination der Eigenschaften der Polyolefine, insbesondere von PP zunutze. Die Polyolefine weisen infolge ihrer unpolaren Struktur eine ungewöhnlich hohe Beständigkeit gegen Chemikalien und andere Medien auf. Sie sind widerstandsfähig gegen wässrige Lösungen von Salzen, gegen nicht-oxidierende Säuren und Alkalien sowie gegen viele Lösungsmittel. Durch den erfindungsgemäßen Aufbau der Polyolefinhohlkammerplatte wird hingegen erreicht, daß die Polyolefinplatten auch eine genügend hohe Stabilität, insbesondere zur Abdeckung von Gruben, haben.

Besonders die ausgezeichnete Beständigkeit gegen Ammoniak in konzentrierter und verdünnter Form, flüssig oder gasförmig, macht die erfindungsgemäßen Polyolefinhohlkammerplatten zu einem idealen Werkstoff als Drainagesystem, insbesondere in der Gülleentsorgung. Neben dem hohen Widerstand gegen Spannungsrißbildung und der ausgezeichneten Schlagzähigkeit weisen die erfindungsgemäßen Polyolefinhohlkammerplatten ein günstigeres Abriebsverhalten auf als die meisten anderen Thermoplaste. Sie können zudem problemlos aus Recyclat hergestellt werden und sind ihrerseits recyclierbar. Ein vergleichsweise günstiger Preis macht die für Viehställe erforderlichen Mengen erschwinglich. Darüber hinaus erfüllen die Polyolefinhohlkammerplatten, insbesondere in der obigen Geometrie und den obigen Abmessungen, die statischen Anforderungen bezüglich einer mittig aufgebrachten Streckenlast von 1 500 N.

Entsprechend gehört zur Erfindung auch die Verwendung von Polyolefinhohlkammerplatten als Abdeckungen für Gruben, insbesondere Güllegruben, sowie die Verwendung von Polyolefinhohlkammerplatten als Drainagesystem, insbesondere über Gruben, insbesondere zur Gülletrennung. Für diese Verwendungen kommen insbesondere die oben beschriebenen speziellen Polyolefinhohlkammerplatten in Betracht.

Die erfindungsgemäßen Güllegruben mit Drainagesystem zur Gülletrennung sind aufgebaut aus einer Güllegrube, in die feste und flüssige Gülle einfällt, und einem Drainagezwischenboden, der insbesondere die festen Güllebestandteile auffängt und insbesondere die flüssigen Güllebestandteile in die Grube durchläßt und ggf. von Zeit zu Zeit von den festen Güllebestandteilen befreit wird. Erfindungsgemäß hat diese Güllegrube einen Drainagezwischenboden aus mind. einer Polyolefinhohlkammerplatte. Die Polyolefinhohlkammerplatte hat mindestens einen Rand, der eine Durchlaß für die Flüssiggülle in das tieferliegende Grubeninnere bildet. Insbesondere die oben beschriebenen speziellen Polyolefinhohlkammerplatten sind als Drainagezwischenboden in der Güllegrube geeignet. Die Erfindung betrifft daher auch ein Verfahren zur Trennung von Gülle, bei dem Gülle auf einem Drainagezwischenboden aufgefangen und in im wesentlichen feste und im wesentlichen flüssige Güllebestandteile getrennt und ggf. weiterverarbeitet wird, wobei als Drainagezwischenboden eine Polyolefinhohlkammerplatte eingesetzt wird. Auch bei dem erfindungsgemäßen Verfahren werden vorzugsweise die oben beschriebenen speziellen Hohlkammerplatten eingesetzt.

Die Erfindung wird im folgenden anhand von Zeichnungen näher ausgeführt.

Es zeigen
Fig. 1 eine Polyolefinhohlkammerplatte im Querschnitt;
Fig. 2 eine Güllegrube mit Drainage im Querschnitt; und
Fig. 3 eine Draufsicht auf die Drainage der Güllegrube in Fig. 2.

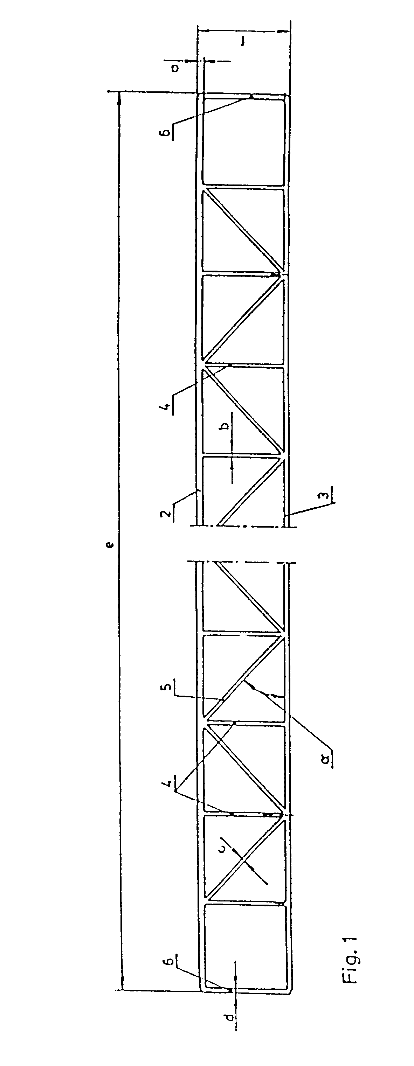

Die in Fig. 1 dargestellte Polyolefinhohlkammerplatte 1 ist aufgebaut aus einer oberen Gurtplatte 2 und einer unteren Gurtplatte 3, die durch senkrechte Stege 4 und dachförmig angeordnete schräge Stege 5 voneinander auf Abstand gehalten sind. Der Winkel a beträgt vorzugsweise 30 bis 75_{°}, in der dargestellten Ausführungsform 45_{°}. Die Dicke a der Gurtplatten 2 und 3 beträgt vorzugsweise 0,7 bis 3 mm, die Dicke b der senkrechten Stege 4 vorzugsweise 0,2 bis 0,5 und die Dicke c der schrägen Stege 5 vorzugsweise 0,4 bis 1 mm. Vorzugsweise wird die erfindungsgemäße Polyolefinhohlkammerplatte im Randbereich von senkrechten Stegen 6 abgeschlossen, die insbesondere eine Dicke d im Bereich der Gurtplatten 2 und 3 haben. Die gesamte Breite e der erfindungsgemäßen Polyolefinhohlkammerplatten 1 liegt üblicherweise im Bereich 0,5 bis 2,5 m, insbesondere bei 0,98 bis 2,1 m. Der Abstand f von Außenseite zu Außenseite der Polyolefinhohlkammerplatte 1 beträgt vorzugsweise 11 bis 40 mm, insbesondere 16 bis 40 mm. Die gesamte Länge der Polyolefinhohlkammerplatten ist produktionstechnisch bedingt, da diese Platten extrudiert werden. Üblicherweise kann die Länge bis zu 10 m betragen, es sind jedoch auch direkte Fertigungen in der vorgesehenen Grubenbreite möglich, d. h. insbesondere Längen zwischen 1,2 bis 2,5 m.

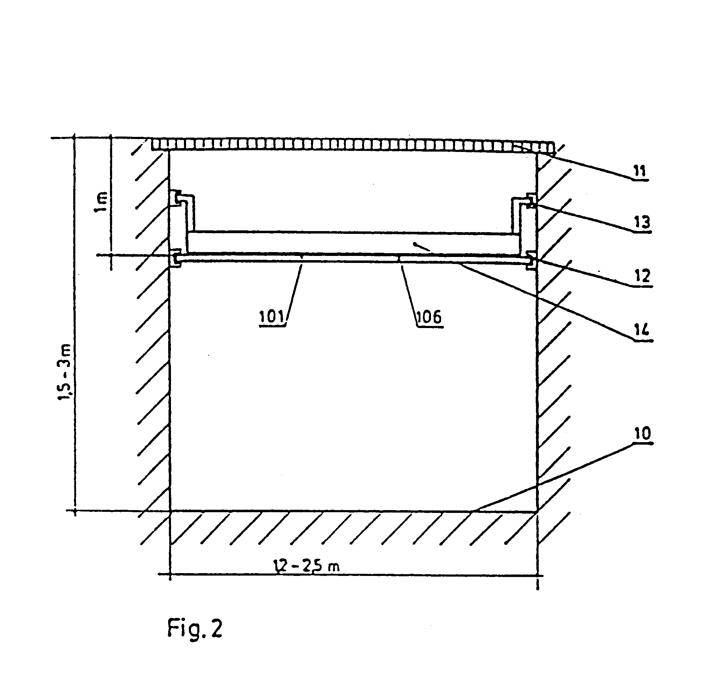

Fig. 2 zeigt eine erfindungsgemäße Güllegrube 10, die von Beton-Rasterelementen 11 abgedeckt ist, durch die der Kot der Tiere in die Güllegrube 10 fällt. Hierbei wird der Kot von einem Drainagezwischenboden aufgefangen, der aus Polyolefinhohlkammerplatten 101 gebildet ist. Die Polyolefinhohlkammerplatten 101 sitzen in Metallschienen 12 und sind vorzugsweise so eingeschoben, daß die Stege 104, 105 rechtwinklig zu den Metallschienen 12 verlaufen, wodurch die Stabilität der Platte erheblich erhöht wird. Außerdem erhält man bei dieser Anordnung glatte Polyolefinhohlkammerplattenseiten 106 und somit einen Schutz gegen Verschmutzung des Polyolefinhohlkammerplatteninneren. Die Grube hat üblicherweise eine Breite h von 1,2 bis 2,5 m und eine Tiefe von 2,5 m, die Polyolefinhohlkammerplatten 101 sind in einer Tiefe von ca. 1 m angeordnet. Über den Polyolefinhohlkammerplatten sind Führungsschienen 13 für ein Rakel angeordnet, das von Zeit zu Zeit über die Polyolefinhohlkammerplatten 101 fährt und dabei den festen Kot am Grubenende in einem separaten Auffangbehälter sammelt.

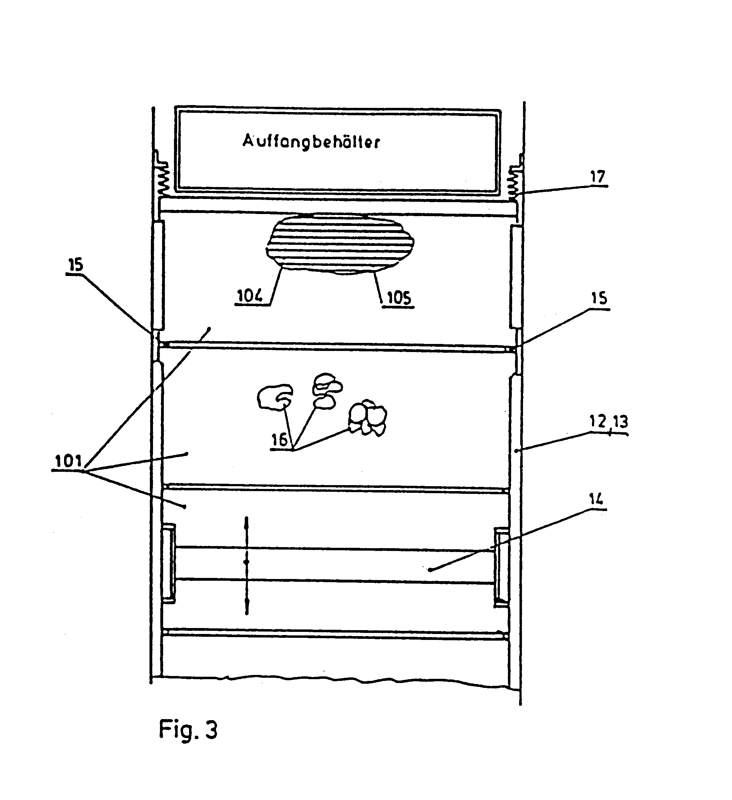

Der Rakel 14 ist in Fig. 3 dargestellt, der Doppelpfeil zeigt an, daß der Rakel 14 in beide Richtungen über die Polyolefinhohlkammerplatten 101 geschoben wird. Vorzugsweise sind deshalb an beiden Enden der Grube Auffangbehälter für den Festkot angeordnet. Die Polyolefinhohlkammerplatten 101 werden mittels Distanzhalter 15 auf Abstand i gehalten, der vorzugsweise 5 bis 10 mm beträgt. Der Abstand i ist so gewählt, daß der Festkot 16 im wesentlichen nicht durch den Spalt i fällt, sondern mittels des Rakels 14 über die Platten 101 bis an das Grubenende verschoben wird. Am Ende der Kammer, vorzugsweise an beiden Enden, ist eine Federvorrichtung 17 angeordnet, die ein eventuelles Auseinanderwandern der Polyolefinhohlkammerplatten 101 verhindert.

Durch Einbringen des Drainagesystems erfindungsgemäß aus Polyolefinhohlkammerplatten kann eine Trennung von Fest- und Flüssigkot erfolgen. Die Polyolefinhohlkammerplatten werden dabei ca. 1 m unterhalb der Betonboden-Rasterelemente seitlich an den Grubenwänden mittels U-Metallschienen befestigt, in die sich die erfindungsgemäßen Polyolefinhohlkammerplatten einschieben lassen. Auch andere Plattenbefestigungen sind mögich. Zwischen den Platten werden Distanzhalter eingesetzt, die die Platten auf ca. 5 bis 10 mm Abstand halten. Eine stirnseitig angebrachte Federvorrichtung verhindert ein eventuelles Auseinanderwandern der Kunststoffplatten bedingt durch Feuchte- und Temperaturschwankungen. Die Trennung des durch die Betonboden-Rasterelemente fallenden Kotes erfolgt nun, indem ein seitlich geführtes Rakel mit Gummilippen-Dichtung (o. ä.) über die gesamte Breite des Zwischenbodens, vorzugsweise im 5 bis 10 min-Takt gezogen wird. Der sich in der Grube sammelnde Flüssigkot wird zur chemischen Umsetzung in entsprechende Tanks umgepumpt, der über dem Drainageboden über die erfindungsgemäß angeordneten Polyolefinhohlkammerplatten abgezogene Festkot in Auffangbehältern vorzugsweise zu Ballen gepreßt.

## Patentansprüche

1. Polyolefinhohlkammerplatte, die zwei Gurtplatten aufweist, die durch senkrechte Stege voneinander getrennt auf Abstand gehalten sind, dadurch gekennzeichnet, daß zwischen zwei benachbarten senkrechten Stegen ein schräger Steg angeordnet ist.

2. Polyolefinhohlkammerplatte nach Anspruch 1, dadurch gekennzeichnet,
daß benachbarte schräge Stege dachparallel zueinander verlaufen.

3. Polyolefinhohlkammerplatte nach Anspruch 1 oder 2,
dadurch gekennzeichnet,
daß als Polyolefin Polypropylen eingesetzt wird.

4. Verwendung von Polyolefinhohlkammerplatten als Abdeckung für Gruben, insbesondere Güllegruben.

5. Verwendung von Polyolefinhohlkammerplatten als Drainagesystem, insbesondere über Gruben, insbesondere zur Gülletrennung.

6. Verwendung nach Anspruch 4 oder 5, dadurch gekennzeichnet,
daß die Polyolefinhohlkammerplatten eine gemäß Anspruch 1 bis 3 ist.

7. Güllegrube mit Drainagesystem zur Gülletrennung, enthaltend eine Güllegrube, in die feste und flüssige Gülle einfällt, und einen Drainagezwischenboden, der insbesondere die festen Güllebestandteile auffängt und insbesondere die flüssigen Güllebestandteile in die Grube durchläßt und ggf. von Zeit zu Zeit von den festen Güllebestandteilen befreit wird, dadurch gekennzeichnet,
daß der Drainagezwischenboden aus mindestens einer Polyolefinhohlkammerplatte gebildet ist.

8. Güllegrube nach Anspruch 7,
dadurch gekennzeichnet,
daß die Polyolefinhohlkammerplatte eine gemäß Anspruch 1 bis 3 ist.

9. Verfahren zur Trennung von Gülle, bei dem Gülle auf einem Drainagezwischenboden aufgefangen und in im wesentlichen feste und im wesentlichen flüssige Güllebestandteile getrennt und ggf. weiter verarbeitet wird, dadurch gekennzeichnet,
daß als Drainagezwischenboden eine Polyolefinhohlkammerplatte eingesetzt wird.

10. Verfahren zur Trennung von Gülle nach Anspruch 9,
dadurch gekennzeichnet,
daß als Polyolefinhohlkammerplatte eine gemäß einem der Ansprüche 1 bis 3 eingesetzt wird.
